# EUROPEAN PATENT APPLICATION

(11) **EP 1 688 864 A1**
(43) Date of publication of application: **09.08.2006**
(21) Application number: 06007094.3
(22) Date of filing: 27.06.2002
(51) Int. Cl.: G06K 13/08, G06K 13/077, G11C 7/10

(54) **Multi input memory device reader**

(30) Priority: 27.06.2001 GB 0115675; 27.06.2001 GB 0115684
(62) Divisional of application: 02740918.4
(71) Applicant: ePoint Group Limited, Alloa Clakmannanshire, FK10 1TA (GB)
(72) Inventor: McDonald, Donald Wilson, Culross Fife KY12 8JH (GB); Norton, Richard, Cupar Fife KY15 7TQ (GB)
(74) Representative: Fulton, David James

(57) **Abstract**

A digital media access device having several sockets (13, 14, 20, 21, 22) for accessing different removable storage media such as memory cards (13), a means for allowing the user to identify the type of removable storage media and means for indicating (18, 23) which slot to use for the identified storage media. An eject button (29) is provided for ejecting from a plurality of slots. Solenoid (19) actuated shutters are also provided to prevent mis-insertion of memory cards.

## Description

The present invention relates to access of digital storage media. In particular, this invention relates to access to multiple formats of digital storage media in one device.

All digital cameras use one or more forms of internal storage media to store/retain the captured image in some form of non-volatile memory. Digital music players, which rely on compressed audio files, also utilise the same types of solid state memory devices as used in digital cameras.

There are several popular forms of data storage device in common use, however, the market has adopted a number of standard devices which include Compact Flash (CF), SmartMedia (SM), Sony Memory Stick (SonyMS), SecureDigital/Multimedia card (SD/MMC) and various types of Personal Computer Memory Card International Association (PCMCIA) interface storage device including compact type II magnetic drives. In addition, some cameras write directly to Personal Computer (PC) compatible media such as Compact Disk Random Access Memory (CD-RAM) disks and magnetic "floppy" disks.

Although user preferences vary, generally digital camera users capture a full card of images and upload these image files to another system for long-term storage and archiving. Typically a PC system is used as a storage device, whereby images are transferred to an internal storage drive, which is most commonly an industry-standard hard drive. For ultimate data archiving, the image files can be transferred to a secure data storage medium such as CD-Recordable (CD-R) or CD-ReWriteable (CD-RW) disk utilising a PC as the intermediate storage system. Consumer devices are available which provide a more convenient and fast secure storage system for images: these devices link directly to the camera via the data communications interface.

In addition to requiring file storage capabilities, digital camera end-users will ultimately require hard prints of their images. This can be achieved by printing directly from a PC on one of the many types of colour printer available.

Manufacturers of high quality photo-printing equipment are planning to deploy public access systems for the upload and printing of digital images within the traditional photo-finishing retail environment. Consumers can directly insert the physical storage device into the "photo terminal" where the system may read all files and display the images on a video display unit (e.g. a Thin Film Transistor Liquid Crystal Display panel) for selection, manipulation and printing via the installed digital print system. It is intended that such systems take the form of transactional terminals or kiosks with touch-screen displays which are designed for consumer or customer use within a traditional retail environment. As such, both the terminal and the means of interfacing to the physical media have to be designed for ease of use and be engineered for robustness. In addition, it is an essential requirement that images are transferred from the storage device to the processing terminal within a short period of time to reduce customer waiting time at the terminal.

There further exists a requirement for retailers to be able to offer digital music download within stores by writing directly to the physical storage device or by interfacing via one of the communication ports provided on the player, normally Universal Serial Bus (USB). Again, some form of public access terminal is required which customers can use directly without store assistance and which incorporates full transactional payment facilities. This application essentially parallels that of digital imaging with the difference being that data is written to the physical memory device in this instance. The requirements, in terms of electronic communication and physical features of the read/write interface are the same in both applications. Furthermore, there will be other applications and products which utilise compact forms of digital storage device.

In the prior art, devices are known which combine several removable storage media reading devices into one unit. However, the interface of each of the reading devices is different, and the commonalties and differences between each reading device are not utilised to increase the ease of use or manufacture.

It can be seen that it would be advantageous to provide a multi storage device reader/writer, which can interface to all common types of storage device, which is simple to use and can facilitate insertion and removal of the storage devices.

It would also be advantageous to provide a device with robust alignment of storage device during insertion and visual/audible feedback of correct insertion prior to the read/write cycle.

It would be yet further advantageous to provide a device which would combine standard storage readers into a single compact unit, and use the commonalties and differences between each storage reader to the advantage of the user and the manufacturer of the device.

It is a first object of the present invention to provide a multi storage device interface which has features which benefit embedded use within a kiosk or transaction terminal for the purpose of reading data from and writing data to removable storage media.

It is a further object of the present invention to provide a device which permits many commonly used removable storage devices to be presented in a single kiosk peripheral device, with the necessary control features to suit applications in this area.

According to the first aspect of the present invention, there is provided a digital media access device comprising a plurality of interface means for accessing removable storage media and an indicator means for indicating an interface means for accessing the removable storage media of one type.

Preferably, the plurality of interface means have a common mounting.

Preferably, the indicator means indicates the status of said interface means.

Optionally, said indicator means comprises said at least one moveable shutter.

Preferably said indicator means provides visible output.

Optionally said indicator means provides sound output.

Optionally said indicator means provides tactile output.

Optionally, interface means with the same type of ejection means are presented in a group on the common mounting.

Preferably, a plurality of interface means each one having a slot configured so as to prevent insertion of more than one type of removable storage media are presented in a group on the common mounting.

Preferably, a plurality of interface means each one having a slot configured so as to allow insertion of more than one type of removable storage media are presented in a group on the common mounting which is distinct from the group of interface means each one having a slot configured so as to prevent insertion of more than one type of removable storage media.

According to the second aspect of the present invention, there is provided a digital media access system comprising the device and an identification means for identifying one type of said removable storage media wherein said one type is the identified type.

Preferably said identification means identifies the type of a user's removable storage media prior to insertion of said removable storage media.

According to the third aspect of the present invention, there is provided a method of digital media access on one of a plurality of interface means for accessing removable storage media, the method including identifying the type of removable storage media and indicating the interface means for accessing the removable storage media of one type.

Preferably the method further includes identifying the type of removable storage media wherein said one type is the identified type

According to the fourth aspect of the present invention, there is provided a digital media access device comprising a plurality of interface means for accessing removable storage media and an ejection means for ejecting said removable storage media from a plurality of interface means.

According to the fifth aspect of the present invention, there is provided a digital media access device comprising a plurality of interface means for accessing removable storage media and at least one moveable shutter for preventing the user from inserting removable storage media into an interface means.

Preferably, said moveable shutter is actuated by insertion of removable storage media into an interface means and locked by a solenoid.

Optionally, said moveable shutter is actuated by a solenoid.

In order to provide a better understanding of the present invention, an example embodiment of the invention will now be described with reference to the accompanying Figures in which:
Figure 1 illustrates a block diagram of the digital media access device;
Figure 2 illustrates the system including the bezel of the digital media access device which is presented to the user, a PC and a screen.
Figure 3 outlines the main signal routings of the master circuit board; and
Figure 4 outlines the main signal routings of the slave circuit board.
Figure 5 illustrates an exploded assembly view of the device.
Figure 6 illustrates an internal perspective view of the solenoid and shutter mechanism with the shutter locked to prevent insertion of a storage medium.
Figure 7 illustrates an internal perspective view of the solenoid and shutter mechanism with the shutter released.

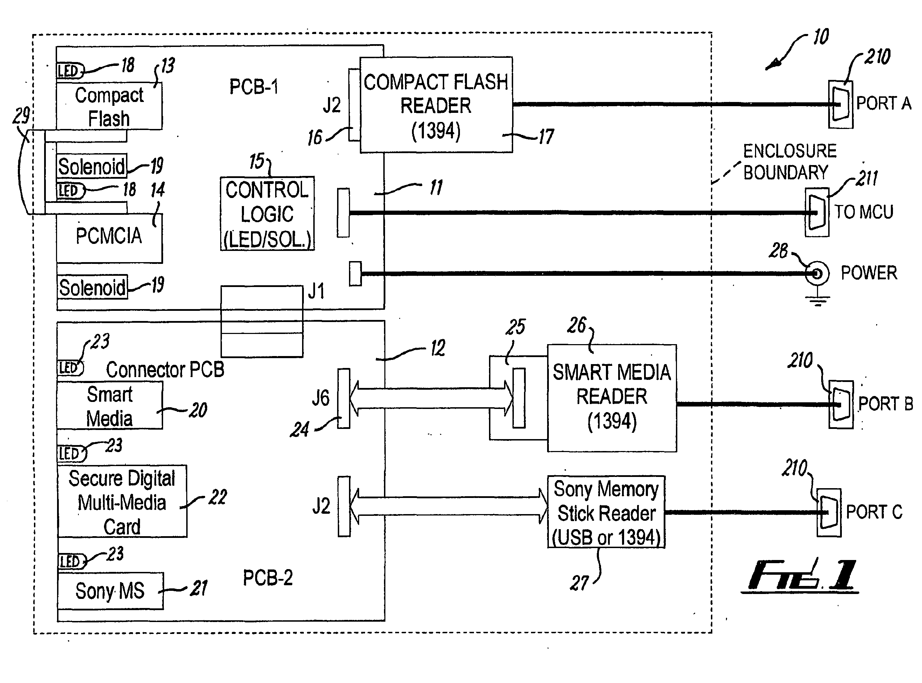

With reference to Figure 1, illustrating a device block diagram 10 and the components of a such a multi storage access device, there are provided dedicated reader devices for each type of removable memory storage.
The device external connector interfaces are presented on two Printed Circuit Boards (PCBs).

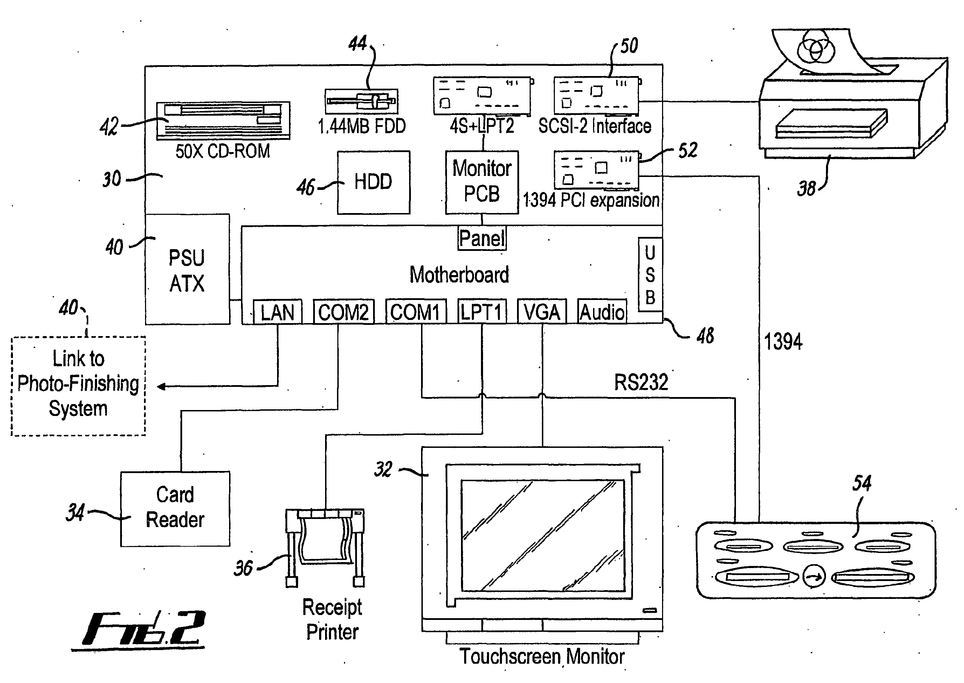

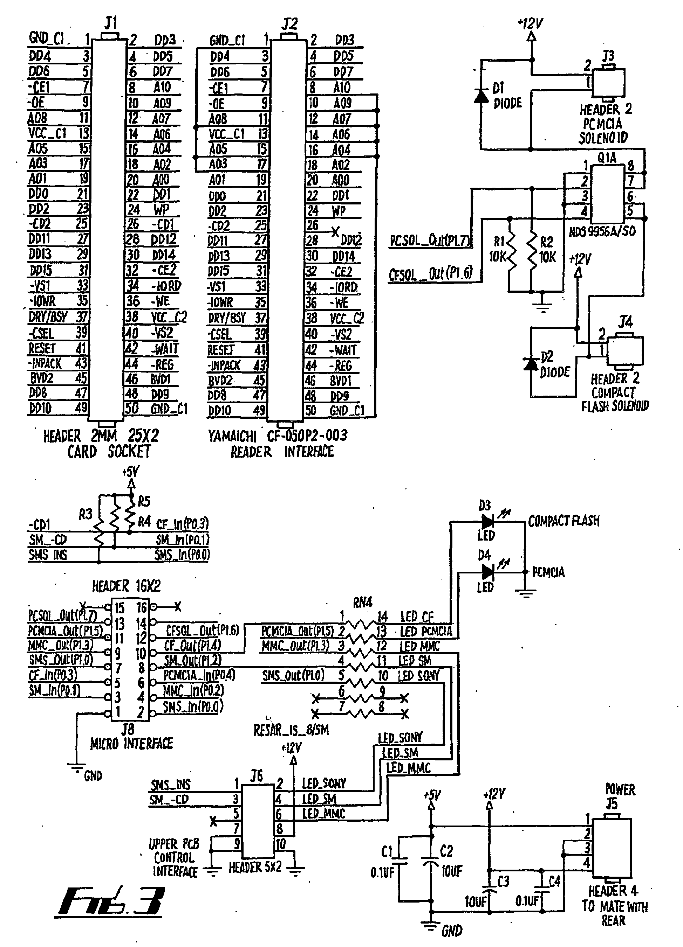

PCB-1 11, the master, incorporates the Compact Flash (CF) connector 13 and PCMCIA connector 14 plus control logic block 15. PCB-1 includes a direct header 16 which inserts into the CF connector on the CF reader 17. This eliminates the need for an interconnecting cable and simplifies the assembly process. It also ensures that the effective parasitic loadings on the communications and data lines are kept to a minimum and controls impedance to ensure signal transmission integrity. Essentially, the CF interface works as a true Integrated Drive Electronics / Advanced Technology Attachment (IDE/ATA) interface. As such, it is possible to also cater for a PCMCIA memory device by multiplexing the data and control signals from the CF reader onto the appropriate pins of the PCMCIA connector. This requires only minimal multiplexing of appropriate CF address lines within the control logic block. Figure 3, described below, outlines the main signal routings of this circuit board.

The control logic block 15 provides low level digital control of the front bezel LEDs 18 and 23. Each connector slot on the front bezel of the device has a single LED to indicate status to the end user of the storage reader device for that connector slot. For example, this user would be asked to identify the type of memory device they have by application software controlling the images presented on the main kiosk screen. The LED will then be illuminated when the user is prompted to insert the memory device. Additionally, the LED could be controlled in a pulsed mode to indicate when it is safe to remove the memory device from the slot. This is important, as loss of data or damage to the card could result from removal of the device whilst it is being accessed.

The control logic block 15 also provides control of the two shutter solenoids 19 on the CF and PCMCIA connector slots. This is ultimately controlled by the main application software. The shutters prevent users from inserting smaller cards into the larger CF and PCMCIA sockets. The PCB-1 11 is connected to an external MicroController Unit (MCU) which provides Transistor-Transistor Logic (TTL) level signals to the control logic circuit block.

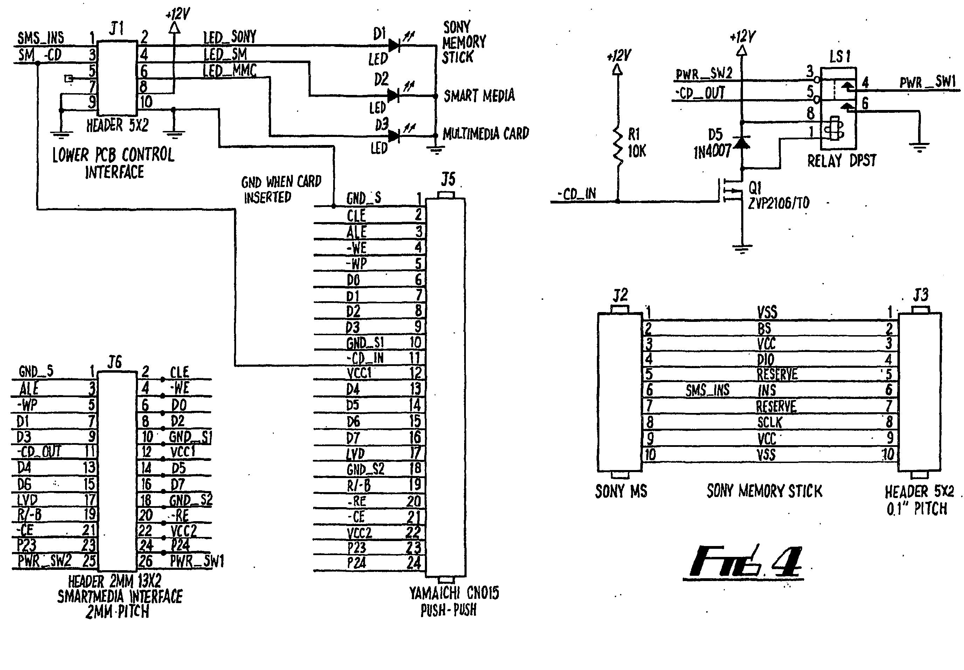

PCB-2 12, the slave, incorporates the Smart Media connector 20 and SonyMS connector 21 and additional SD/MMC connector 22 plus the LEDs 23 for each of these devices. A Smart Media internal cable connector 24 is connected to a plug-in adapter PCB 25 (PCB-3) which simplifies connection of the multi-way (26-way) interface to the Smart Media reader 26. Figure 4, described below, outlines the main signal routings of this circuit. A SonyMS internal cable connector is connected to the SonyMS Reader 27.

Power is supplied via a single 3.5mm jack plug 28 to PCB-1. This provides all of the necessary power to each component and control of the power on sequence to each device.

The manual eject button 29 is coupled to both the eject mechanisms of the CF 13 and PCMCIA 14 storage device connectors such that one button operates both eject mechanisms. There is optionally included provision for sensing the depression of the eject button. Furthermore, an optical detector may be used to determine when the storage card is inserted, but not fully connected.

External connections to communication ports are provided for the readers 210 and an external connector to an MCU is provided for the control logic 211.

Figure 2 is a system application diagram an embodiment for interfacing digital storage devices to a host system.

The kiosk system comprises a host system 30, which is shown here implemented by a personal computer (PC) based system. A number of peripherals may be connected to the host system to provide the various functional aspects of the kiosk.

On the bezel 200 presented to the user, there are provided a the Compact Flash (CF) connector 13 and PCMCIA connector 14, with associated LEDs 18. There are also provided a Smart Media connector 20 and SonyMS connector 21 and additional SD/MMC conector 22 and the LEDs 23 for each of these three devices. The manual eject button 29 is coupled to both the eject mechanisms of the CF 13 and PCMCIA 14 connectors.

A touchscreen monitor 32 provides a graphical user interface (GUI) for the kiosk. The monitor and software on the host provide a way to identify the type of removable storage media that user wants to use, for example by showing pictures of a range of media types, and asking the user to touch the desired one on the screen. The monitor and software on the host then further provide a second way (the first way being the LED on the bezel) of indicating the correct slot for the desired (and now identified) type, for example by showing on the screen an animation of a card being inserted into the correct slot. The LED is thus depicted as flashing in the animation, while the actual LED indicator is flashing on the bezel. This makes the system easy to use for even a young child.

A card reader 34 is provided for reading credit cards or other type of charge card to provide payment for use of the kiosk, and a receipt printer 36 for proof of purchase. A colour printer may be provided for printing proof prints and other documents. Additionally, a link to photo-finishing system 40 is provided for the provision of high quality photographic prints. An interface module 42 provides the means for interfacing all of the key devices (such as CF, SM, SonyMS, SD/MMC and PCMCIA memory card) are in a single kiosk peripheral device, with the necessary controls features to suit applications in this area.

The host system comprises the necessary elements needed for interfacing and controlling the various peripherals of the kiosk, including media storage CD-ROM drive 42, floppy disk drive 44 and hard disk drive 46; motherboard 48, printer interface 50 and interface 52 to digital storage device interface module 54.

There are provided a Compact Flash (CF) connector 13 and PCMCIA connector 14, with associated LEDs 18. There are also provided a Smart Media connector 20 and SonyMS connector 21 and additional SD/MMC conector 22 and the LEDs 23 for each of these three devices. The manual eject button 29 is coupled to both the eject mechanisms of the CF 13 and PCMCIA 14 connectors.

Figure 3 outlines the main signal routings of PCB-1 11, using standard electronic component notation to depict the components.

Figure 4 outlines the main signal routings of PCB-2 12, using standard electronic component notation to depict the components.

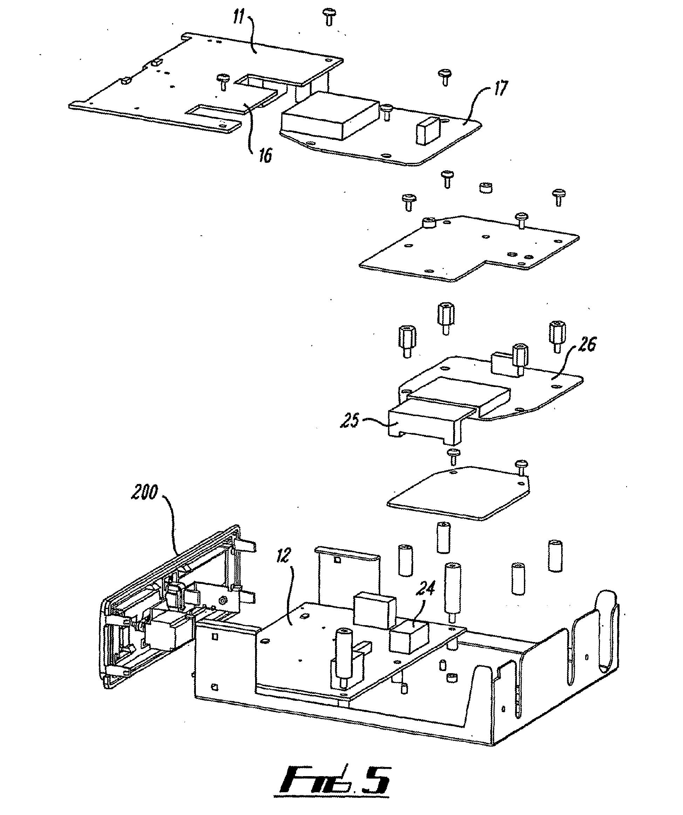

Figure 5 shows an illustration of an exploded view of the assembly of the digital media access device with the main components labelled for clarity. The bezel 200 is shown, with PCB-1 11 including a direct header 16, a CF reader 17, a Smart Media internal cable connector 24 mounted on PCB-2 12 for connecting to the plug-in adapter PCB assembly 25 (PCB-3) which simplifies connection of the multi-way interface to the Smart Media reader 26.

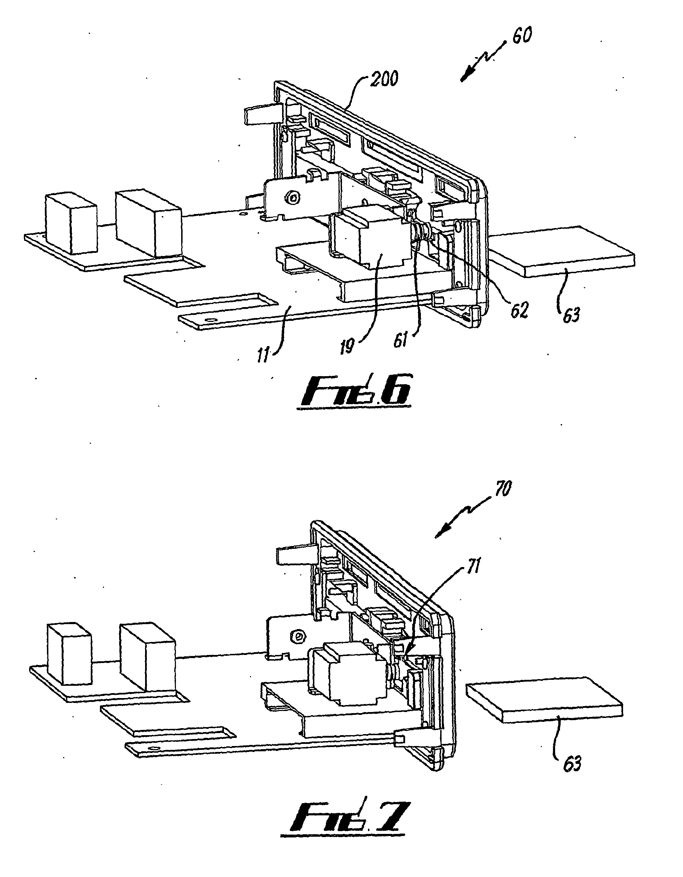

With reference to Figure 6, which shows an illustration of the assembly 60 of the master PCB-1 11 and the bezel 200, the solenoid 19 is shown with the solenoid plunger 61 locking the shutter by sitting over a step on the bezel 62. A Compact Flash removable storage card 63 is also shown.

With reference to Figure 7, which shows an illustration of the assembly 70 of the master PCB-1 11 and the bezel 200 in the case that the solenoid shutter is retracted in order to allow insertion of the Compact Flash card 63.

Further modifications and improvements may be added without departing from the scope of the invention herein described.

## Claims

1. A digital media access device comprising a plurality of interface means for accessing removable storage media and at least one moveable shutter for preventing the user from inserting removable storage media into an interface means.

2. The device of Claim 1 wherein said at least one moveable shutter is actuated by insertion of removable storage media into an interface means and locked by a solenoid.

3. The device of any of Claims 1 to 2 wherein said at least one moveable shutter is actuated by a solenoid.

4. The device of any previous Claim further comprising an indicator means for indicating an interface means for accessing the removable storage media of one type.

5. The device of any previous Claim wherein the plurality of interface means have a common mounting.

6. The device of any of Claims 4 to 5 wherein the indicator means indicates the status of said interface means.

7. The device of any of Claims 4 to 6 wherein said indicator means comprises said at least one moveable shutter.

8. The device of any of Claims 4 to 7 wherein said indicator means provides visible output.

9. The device of any of Claims 4 to 8 wherein said indicator means provides sound output.

10. The device of any of Claims 4 to 9 wherein said indicator means provides tactile output.

11. The device of any previous Claim wherein interface means with the same type of ejection means are presented in a group on the common mounting.

12. The device of any previous Claim wherein a plurality of interface means each one having a slot configured so as to prevent insertion of more than one type of removable storage media are presented in a group on the common mounting.

13. The device of any previous Claim wherein a plurality of interface means each one having a slot configured so as to allow insertion of more than one type of removable storage media are presented in a group on the common mounting which is distinct from the group of interface means each one having a slot configured so as to prevent insertion of more than one type of removable storage media.

14. A digital media access system comprising the device of any previous Claim and an identification means for identifying the type of said removable storage media wherein said one type is the identified type.

15. The system of Claim 14 wherein said identification means identifies the type of a user's removable storage media prior to insertion of said removable storage media.

16. The device of any previous Claim further comprising an ejection means for ejecting said removable storage media from a plurality of interface means.
